# EUROPEAN PATENT APPLICATION

(11) **EP 4 764 943 A1**
(43) Date of publication of application: **24.06.2026**
(21) Application number: 25225806.6
(22) Date of filing: 19.12.2025
(51) Int. Cl.: G06K 7/10

(54) **METHOD AND SYSTEM FOR TAG READER NEIGHBOR RECOGNITION AND COORDINATION IN A RADIO FREQUENCY IDENTIFICATION (RFID) SYSTEM**

(30) Priority: 20.12.2024 US 202418990827
(71) Applicant: T MOBILE INNOVATIONS LLC, Overland Park KS 66251-2100 (US)
(72) Inventor: BERTZ, Lyle, Lee s Summit, 64086 (US); BUTLER, Robert, Overland Park, 66210 (US); FANG, Zheng, Mclean, 22102 (US)
(74) Representative: Suddaby, Mark Edward

(57) **Abstract**

A method implemented in a radio frequency identification (RFID) system for identifying neighboring readers and antennas in the RFID system through reader coordination is provided. The method comprises configuring a first antenna coupled to a first reader and a second antenna coupled to a second reader to operate in different communication sessions; receiving first tag data indicating first tags read via the first antenna; receiving second tag data indicating second tags read via the second antenna; determining, based on the first and second tag data, that there is a common tag between the first tags and the second tags; determining, based on a presence of the common tag, that the first and second antennas are neighbors; and configuring, based on the first and second antennas being neighbors, at least one of a first tag read configuration for the first antenna or a second tag read configuration for the second antenna.

## Description

### BACKGROUND

Radio frequency identification (RFID) systems generally include at least one reader that communicates with at least one RFID tag (which may generally be referred to as a tag) using radio frequency (RF) signals. Each tag may be associated with (e.g., attached to or embedded in) an entity (e.g., an item or an individual) and may store identification (ID) information about the respective entity. RFID systems may use active tags that include an internal power source, such as a battery, and/or passive tags that do not include an internal power source, but instead are remotely powered by the reader.

RFID systems may be used in a variety of applications. For example, RFID systems have been used in supply chain management applications to identify and track merchandise throughout manufacture, warehouse storage, transportation, distribution, and retail sales. RFID systems have also been used in inventory management to track and monitor the location and status of store items. As applications for using RFID systems continue to grow, there is a need to improve RFID technologies.

### SUMMARY

In an embodiment, a method implemented in a radio frequency identification (RFID) system for identifying neighboring readers and antennas in the RFID system through reader coordination is provided. The method comprises coordinating, by a reader coordinator application at a computer system, operations of a plurality of readers, each coupled to one or more of a plurality of antennas, wherein the coordinating comprises transmitting, to a first reader of the plurality of readers, a first command to configure a first antenna of the plurality of antennas coupled to the first reader to perform tag read operations using a first communication session in a read cycle; and transmitting, to a second reader of the plurality of readers, a second command to configure a second antenna of the plurality of antennas coupled to the second reader to perform tag read operations using a second communication session different than the first communication session in the read cycle; receiving, by the reader coordinator application, from the first reader, first tag data comprising an indication of one or more first tags read via the first antenna in the first communication session; receiving, by the reader coordinator application, from the second reader, second tag data comprising an indication of one or more second tags read via the second antenna in the second communication session; determining, by the reader coordinator application, based on a comparison of the first tag data and the second tag data, that there is at least one common tag between the one or more first tags read via the first antenna and the one or more second tags read via the second antenna; determining, by the reader coordinator application, based on a presence of the at least one common tag, that the first antenna and the second antenna are neighboring antennas with at least partially overlapped radio frequency (RF) coverages; and configuring, by the reader coordinator application, based on the first antenna and the second antenna being neighboring antennas with the at least partially overlapped RF coverages, at least one of a first tag read configuration for the first antenna or a second tag read configuration for the second antenna for performing subsequent tag read operations.

In another embodiment, a method implemented in a radio frequency identification (RFID) system to manage coverages of readers through reader coordination is provided. The method comprises configuring, by a reader coordinator application at a computer system, a first antenna coupled to a first reader and a second antenna coupled to a second reader to respectively operate in different communication sessions in a plurality of read cycles based on an adjacency between the first antenna and the second antenna; varying, by the reader coordinator application, at least one of a transmission power level of the first antenna or a transmission power level of the second antenna across the plurality of read cycles; receiving, by the reader coordinator application, for each of the plurality of read cycles, an indication of first tags read via the first antenna and an indication of second tags read via the second antenna; determining, by the reader coordinator application, that respective first tags read via the first antenna and respective second tags read via the second antenna in a first read cycle of the plurality of read cycles satisfy one or more criteria; and configuring, by the reader coordinator application, based on the determining, the first antenna to operate at a first transmission power level in a read cycle subsequent to the plurality of read cycles, the first transmission power level being based on a respective transmission power level of the first antenna in the first read cycle.

In yet another embodiment, a method implemented in a radio frequency identification (RFID) system to manage and track tag locations through reader coordination is provided. The method comprises configuring, by a reader coordinator application at a computer system, a first antenna coupled to a first reader and a second antenna coupled to a second reader to respectively operate in different communication sessions in a plurality of read cycles based on an adjacency between the first antenna and the second antenna; receiving, by the reader coordinator application, from the first reader, first tag data comprising an indication of one or more first tags read via the first antenna in a first read cycle of the plurality of read cycles; receiving, by the reader coordinator application, from the second reader, second tag data comprising an indication of one or more second tags read via the second antenna in the first read cycle; identifying, by the reader coordinator application, based on a comparison of the first tag data and the second tag data, a common tag between the one or more first tags and the one or more second tags; and determining, by the reader coordinator application, based on the first tag data and the second tag data, location information associated with the common tag.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, where like reference numerals represent like parts.
FIG. 1 is a block diagram of a radio frequency identification (RFID) system according to an embodiment of the disclosure.
FIG. 2 is a signaling diagram illustrating an example method of coordinating reader operations in an RFID system according to an embodiment of the disclosure.
FIG. 3 is a timing diagram illustrating an example read cycle for reading tags in an RFID system according to an embodiment of the disclosure.
FIG. 4 is a flow chart of an example method of managing coverages of readers in an RFID system according to an embodiment of the disclosure.
FIG. 5 is a flow chart of a method according to an embodiment of the disclosure.
FIG. 6 is a flow chart of another method according to an embodiment of the disclosure.
FIG. 7 is a flow chart of yet another method according to an embodiment of the disclosure.
FIG. 8 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

As discussed above, a radio frequency identification (RFID) system may include at least one reader in communication with one or more RFID tags. To that end, a reader may be coupled to at least one antenna and may configure the antenna to emit an RF signal (e.g., a carrier wave) in a particular frequency. The RF signal or RF radiation provides a means for communicating with a tag (e.g., for querying or requesting identification (ID) information stored at the tag). In some cases, the RF signal or the RF radiation also provides the tag (e.g., a passive tag) with the power or energy to communicate. That is, a tag may derive power from the RF signal that the tag is given and on the frequency the tag is given for communication. The tag may perform some processing (e.g., encoding the ID information) and then respond back to the reader. The response may include ID information about the entity that is associated with the tag. The entity may vary depending on the use case. In certain examples, the entity may be an item in a retail store.

A reader and a tag may communicate with each other over a variety of frequency bands and according to a variety of communication protocols. In an example, the reader and the tag may communicate over an industrial, scientific, and medical (ISM) band (which is an unlicensed band). An unlicensed band may operate as a shared channel where wireless communication devices may contend for access to the shared channel for communication. In some examples, the reader and the tag may utilize a slotted ALOHA protocol for communication over the shared channel. In the slotted ALOHA protocol, a shared channel is divided into time slots, which are fixed time intervals. The reader may send an RF signal in the selected slot to scan or read from the tag. The tag may select a slot based on a random number (e.g., generated using a seed value provided by the reader) and may transmit a response to the reader in the selected slot. In an example, a reader and a tag may communicate further using communication sessions as defined in the electronic product code (EPC) Gen2 RFID standard.

The EPC Gen2 RFID protocol allows up to four communication sessions (e.g., session 0, session 1, session 2, and session 3) in an inventory round. An inventory round is a period during which a tag population (e.g., a set of tags) is to be read. An inventory round may also be referred to as an inventory cycle or a read cycle. Each communication session is identified by a unique session identifier. Each of the communication sessions may have different modes of operations (e.g., related to how long a reader may transmit a continuous RF carrier signal to power remote tags and how a tag may maintain the tag's state, etc.). A reader may select one of the four communication sessions (e.g., session 0) to communicate with a tag (e.g., to read ID information). When the tag is initially powered up, the tag may respond to any communication session. While the tag still has power (e.g., provided by the reader), the tag may respond to other communication sessions (e.g., sessions 1, 2 and 3). That is, the tag may support up to four reads from four different sessions within an inventory round. However, the tag may be restricted to respond to each communication session only once. That is, once the tag has responded to a particular communication session in an inventory round, the tag may not respond to the same communication session again in that inventory round. This particular restriction in the protocol can cause challenges as tag read operations of readers are typically not coordinated.

Without reader coordination, readers in an RFID system can each independently select one of the four communication sessions for scanning tags and there is no exchange of information about the selection of communication sessions among the readers. As such, in some scenarios, two readers (e.g., a first reader and a second reader) may select the same communication session to scan for tags in the same inventory round. If the two readers have at least partially overlapped RF coverages and there is a tag located within the overlap, the tag may respond to the reader that sent out the earlier request (for ID information) but not the reader that sent out the later request. Thus, while there is an overlap between coverages of the two readers, the RFID system may be unable to detect that. This issue can generally occur between adjacent antennas of the same reader or of different readers that are adjacent to each other.

In some cases, it may be desirable for an RFID system to manage RF coverages of readers, for example, to minimize the number of fixed readers (e.g., readers that are installed at fixed locations) required to cover a certain geographical area as fixed readers can be costly and may each have a limited number of antennas (e.g., between 1 to 32 antennas). However, because of the protocol restriction and the lack of reader coordination discussed above, an RFID system may be unable to detect overlapping coverages, causing more fixed readers to be placed than needed, and thus unnecessarily increasing the cost of the RFID system.

The present disclosure provides a technical solution to the aforementioned technical problems in the technical field of RFID to provide an improved RFID system with capabilities to identify or recognize neighboring readers and/or neighboring antennas without protocol modifications (to the EPC Gen2 RFID protocol). For instance, the system may perform neighbor recognition by actively managing readers collaboratively and managing the communication sessions used by such readers. Specifically, the system may configure the readers to read or scan tags using different communication sessions at the same time (e.g., in the same inventory cycle or read cycle). If the readers read the same tag, their respective antennas may be neighbors and may have RF coverages that are at least partially overlapping. The system may include a coordinator or a supervisor (e.g., software on a server) that assigns different communication sessions to neighboring antennas (of the same reader and/or of different readers).

Once the coordinator recognizes an adjacency between two antennas, the coordinator may manage the transmission power levels of neighboring antennas to control the amount of RF coverage overlap between the neighboring antennas. In one example, the coordinator may reduce the transmission power levels of neighboring antennas so that those neighboring antennas may have no overlap, and thus may not read or count the same tag. In another example, the coordinator may control the transmission power levels of some neighboring antennas such that those neighboring antennas may have a certain overlap to provide tag read redundancy (e.g., in case one antenna fails to read a certain tag, a neighboring antenna may reach and read that tag). The coordinator may further improve the accuracy of location information of tags based on receive signal information (e.g., receive signal strength indicator (RSSI), time of arrival (TOA), etc.) received from neighboring antennas and subsequently assist in locating a lost or invisible tag.

According to an embodiment of the present disclosure, an RFID system may include tags, readers, and a computer system (e.g., a server) including a reader coordinator application (e.g., software) that coordinates operations of the readers. Each reader may be coupled to one or more antennas. To coordinate the operations of the readers, the reader coordinator application may transmit, to a first reader of the readers, a first command to configure a first antenna coupled to the first reader to perform tag read operations using a first communication session in a read cycle. Further, as part of the coordination, the reader coordinator application may transmit, to a second reader of the readers, a second command to configure a second antenna coupled to the second reader to perform tag read operations using a second communication session different than the first communication session in the read cycle. In one embodiment, the first reader and the second reader are different readers. In another embodiment, the first reader and the second reader correspond to the same reader. That is, the first antenna and the second antenna are coupled to the same reader. In some embodiments, the first communication session and the second communication session may correspond to different EPC Gen2 RFID protocol sessions identified by different session identifiers.

Subsequently, the reader coordinator application may receive, from the first reader, first tag data including an indication of first tags read via the first antenna in the first communication session (of the read cycle). Further, the reader coordinator application may receive, from the second reader, second tag data including an indication of second tags read via the second antenna in the second communication session (of the read cycle).

Next, the reader coordinator application may compare the first tag data and the second tag data to determine whether the first antenna and the second antenna are neighboring antennas. For instance, the first tag data may include first tag identifiers, each identifying a respective one of the first tags, and the second tag data may include second tag identifiers, each identifying a respective one of the second tags. If there is a tag identifier of the first tag identifiers identical to a tag identifier of the second tag identifiers, the first antenna and the second antenna are neighbors. Stated differently, the reader coordinator application may determine the presence of a common tag between the first tags (read via the first antenna) and the second tags (read via the second antenna) based on a tag identifier of the first tag identifiers being identical to a tag identifier of the second identifiers. Based on the presence of the common tag (between the first tags read via the first antenna and the second tags read via the second antenna), the reader coordinator application may determine that the first antenna and the second antenna are neighboring or adjacent antennas with at least partially overlapped RF coverages.

In an embodiment, after identifying the adjacency between the first antenna and the second antenna, the reader coordinator application may manage communication sessions used by the first and second antennas. For instance, the reader coordinator application may configure the first and second antennas to operate using different communication sessions in subsequent read cycles. In this way, each of the first and second antennas may continue to read the common tag (e.g., to provide redundancy) without being impacted by the EPC Gen2 protocol restriction (where a tag may respond to a communication session once per read cycle). Additionally or alternatively, the reader coordinator application may determine the boundary and/or the amount of overlap between the coverages of the first antenna and the second antennas by varying the transmission power levels of the first and second antennas and instructing the first reader and the second reader to repeat tag read operations using the first antenna and second antennas, respectively, for each power setting (e.g., at each respective transmission power level).

In an example, the reader coordinator application may vary the transmission power level of the first antenna by instructing the first reader to configure the first antenna to start at a maximum transmission power level of the first antenna and iteratively apply power backoffs across a set of read cycles. As an example, the first antenna may be capable of transmitting at a maximum transmit power of 30 decibel per milliwatt (dBm), and the first reader may configure the first antenna to apply power backoffs in steps of 3 decibels (dB). That is, the first antenna may be configured to transmit at 30 dBm in read cycle N, 27 dBm in read cycle (N+1), 24 dBm in read cycle (N+2), and so on. Similarly, the reader coordinator application may vary the transmission power level of the second antenna by instructing the second reader to configure the second antenna to start at a maximum transmission power level and iteratively apply power backoffs. In other examples, the varying of the transmission power level can start at a minimum transmission power level and iteratively increase until the maximum transmission power level is reached.

Generally, the reader coordinator application may vary the transmission power level of one or both the first antenna and the second antenna in each read cycle. The reader coordinator application may track the tags that are being read under the different power settings and check that no tag is lost (i.e., having a coverage hole) by not being read by at least one of the first antenna or the second antenna. The reader coordinator application may search for the transmit power level for each of the first antenna and the second antenna where no tag is lost, and the coverage overlap is minimized. Once this sweet spot is determined, the first and second antennas may be configured this way to minimize the transmit power for the first and/or second antennas and the coverage overlap. In some instances, the reader coordinator application may turn up the transmit power levels of the first antenna and/or the second antenna by a percentage recognizing that there may be some amount of error in the determinations.

Stated differently, the reader coordinator application may vary at least one of a transmission power level of the first antenna or a transmission power level of the second antenna across a set of read cycles. The varying may include the reader coordinator application configuring the first antenna to iterate through a set of first transmission power adjustments, for example, each in one of the read cycles. The set of first transmission power adjustments may correspond to power backoffs from a maximum transmit power level of the first antenna. Additionally or alternatively, the varying may include the reader coordinator application configuring the second antenna to iterate through a set of second transmission power adjustments, for example, each in one of the read cycles. Similarly, the set of second transmission power adjustments may correspond to power backoffs from a maximum transmit power level of the second antenna.

For each of the read cycles, the reader coordinator application may receive an indication of third tags read via the first antenna (e.g., in the first communication session) and an indication of fourth tags read via the second antenna (e.g., in the second communication session). For each of the read cycles, the reader coordinator application may determine whether the number of common tags between respective third tags (read via the first antenna) and respective fourth tags (read via the second antenna) and/or a tag population covered by the respective third tags and the respective fourth tags satisfy one or more criteria. The one or more criteria may include: 1) the number of common tags between tags read via the first antenna and tags read via the second antenna is to be less than or equals a certain threshold; and 2) each tag in a particular set of tags is to be read by the first antenna and/or the second antenna. The criterion 1) may ensure that the amount of coverage overlap between the first and second antennas is minimized. The criterion 2) may ensure that no tag in the particular set of tags is lost (i.e., no coverage hole). In an example, the reader coordinator application may determine that, in a first read cycle of the set of read cycles, the number of common tags between the respective third tags (read via the first antenna) and the respective fourth tags (read via the second antenna) satisfies the threshold, and the tag population read via the first antenna and the second antenna cover the particular set of tags.

Based on the number of common tags and the tag population read via the first antenna and the second antenna in the first read cycle satisfying the one or more criteria, the reader coordinator application may configure the first antenna and the second antenna to operate at the respective transmission power levels used in the first read cycle. For instance, the reader coordinator application may instruct the first reader to configure the first antenna to operate at a transmission power level that was used for reading the respective third tags in the first read cycle. Further, the reader coordinator application may instruct the second reader to configure the second antenna to operate at a transmission power level that was used for reading the respective fourth tags in the first read cycle. In some examples, the reader coordinator application may adjust (e.g., turn up) the transmission power level for the first antenna and/or the transmission power level for the second antenna by a certain amount (e.g., a certain percentage) to account for errors in the determination process.

After the reader coordinator application has knowledge about the overlap (e.g., the overlapping area and/or the amount of overlap) between neighboring antenna pairs among the readers, the reader coordinator application can provide more precise location information about the tags in the system (e.g., to construct a map of tags in a certain space). To that end, the reader coordinator application may receive, from the first reader, fifth tag data associated with fifth tags read via the first antenna (e.g., in the first communication session) and may receive, from the second reader, sixth tag data associated with sixth tags read via the second antenna (e.g., in the second communication session). The reader coordinator application may determine location information for a particular tag that is common between the fifth tags and the sixth tags. For instance, the fifth tag data may include tag ID information of the particular tag and first receive signal information (e.g., RSSI, TOA, etc.) associated with the particular tag with respect to the first antenna. Similarly, the sixth tag data may include the tag ID information of the particular tag and second receive signal information (e.g., RSSI, TOA, etc.) associated with the particular tag with respect to the second antenna. The reader coordinator application may determine the location information associated with the particular tag based on a difference between the first receive signal information and the second receive signal information (e.g., using location triangulation techniques).

The reader coordinator application may store the location information associated with the particular tag in a database. When the reader coordinator application subsequently receives a location request for the particular tag, the reader coordinator application may retrieve the location information associated with the particular tag from the database and respond to the location request by transmitting the retrieved location information. Generally, the reader coordinator application may vary the transmission power levels of neighboring antennas to determine location information of a tag that is within a coverage overlap of the neighboring antennas using receive signal information at the various transmission power levels.

In some cases, the reader coordinator application may reduce the amount of overlap between the first antenna and the second antenna by configuring one of the first antenna or the second antenna to reduce respective transmission power levels. For example, the reader coordinator application may instruct the first reader to reduce the transmission power level of the first antenna by a certain amount so that the particular tag may be read by the second antenna but not the first antenna. However, in some cases, the second antenna may fail to read the particular tag after some time. That is, the particular tag becomes invisible in the RFID system. To assist recovery of invisible tags in the RFID system, the reader coordinator application may store associations between antennas and corresponding read tags and associations between neighboring antennas in the database. For instance, the reader coordinator application may store, in the database, the tag ID information of the particular tag in association with the first antenna and the second antenna, and an indication that the first antenna and the second antenna are neighbors. As such, when the reader coordinator application detects that the particular tag becomes invisible, the reader coordinator application may retrieve, from the datastore, information about the particular tag. The reader coordinator application may instruct the first reader to increase the transmission power level of the first antenna based on the retrieved information indicating that the first antenna is a neighbor of the second antenna and the particular tag is also associated with (e.g., previously read by) the first antenna. In this way, the first antenna may be able to reach and read the particular tag in the next read cycle.

Coordinating readers and associated antennas in an RFID system allows for neighboring antennas to be identified and management of RF coverages and transmit power of those neighboring antennas. For instance, configuring different antennas to utilize different communication sessions (e.g., EPC Gen2 protocol sessions) for tag reads allows for neighboring antennas to be identified without modifying the protocol. Managing RF coverages and transmit power of neighboring antennas can minimize the number of fixed readers required to be deployed in an RFID system, thereby reducing system cost. Controlling transmission power levels of neighboring antennas to minimize coverage overlap between the neighboring antennas without causing a coverage hole (e.g., based on the criterion 1) and 2) discussed above) can provide power saving and a reduction of number of events reported (e.g., tag responses to queries from the readers), which results in processing efficiencies. Having information about neighboring antennas, the transmission power levels of the neighboring antennas can be varied to determine more precise location information for the tags. Further, the neighboring antenna information can be used to assist recovery of lost tags. For instance, when an antenna fails to reach a certain tag after some time, a neighboring antenna can assist in recovering the lost tag. While the present disclosure is discussed in the context of using a reader coordinator application (e.g., a centralized supervisor) to coordinate operations of readers in an RFID system, the readers may also communicate with each other to assist the coordination.

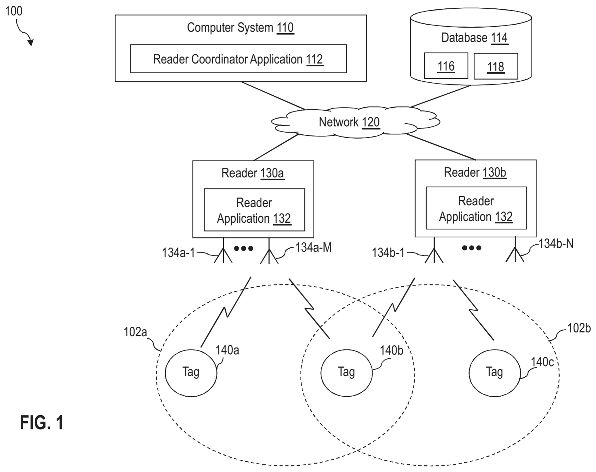

Turning now to FIG. 1, an example RFID system 100 is described. In an example, the RFID system 100 may be deployed in a supply chain environment. In another example, the RFID system 100 may be deployed in a retail store environment. The RFID system 100 may generally be installed in any suitable environment to identify and track items in the environment. The RFID system 100 may include a computer system 110 (e.g., a server), a database 114, a plurality of readers 130, and a plurality of tags 140. For ease of illustration, FIG. 1 illustrates two readers 130a and 130b and three tags 140a, 140b, and 140c. However, an RFID system 100 may include any suitable number of readers 130 (e.g., 2, 3, 4, 5, 10 or more) and any suitable number of tags 140 (e.g., 2, 3, 4, 5, 10, 50, 100, 200, 300 or more). The network 120 promotes communication between the components of the RFID system 100. The network 120 may be any communication network including a public data network (PDN), a public switched telephone network (PSTN), a private network, and/or a combination.

The readers 130 are wireless communication devices for communicating with the tags 140 and reading ID information stored at the tags 140. In some instances, the readers 130 may be fixed readers that are installed at fixed locations. In other instances, the readers 130 may be portable readers. Each reader 130 may include baseband circuitry, RF circuitry coupled to the baseband circuitry, one or more antennas 134 coupled to the RF circuitry. The baseband circuitry may perform functions for communicating with the tags 140. The RF circuitry may convert baseband signals to RF signals that can be transmitted by an antenna 134. The RF circuitry may also convert RF signals received from an antenna 134 to baseband signals. The RF signals are shown by the lightning bolts. As shown, the reader 130a is coupled to antennas 134a-1, ..., 134a-M, and the reader 130b is coupled to antennas 134b-1, ..., 134b-M, where M and N may be any suitable integers. Generally, each reader 130 may be coupled to 1 to 32 antennas 134. Each reader 130 may also include processor(s), non-transitory memory, and a reader application 132 including instructions stored at the non-transitory memory and executable by the processor(s). The reader application 132 may perform functions for requesting information (e.g., ID information) from the tags 140 and receiving the information from the tags 140. As will be discussed more fully below, the reader application 132 may also communicate with a reader coordinator application 112 at the computer system 110 to allow for reader coordination in the RFID system 100.

Each tag 140 may include an antenna for transmitting and receiving RF signals and an RFID chip (or integrated circuit (IC)) which stores the respective tag 140's ID information (e.g., a tag identifier) or other information. Each tag 140 may be attached to (or embedded in) an entity (e.g., an item in a retail store) so that the attached entity may be tracked using the readers 130. In some instances, a tag 140 may be an active tag including an internal power source, such as a battery. In other instances, a tag 140 may be a passive tag that does not have an internal power source, but instead is remotely powered by a reader 130. For instance, a passive tag 140 may draw power from the RF signal emitted by a reader 130. To that end, the RF signal from the reader 130 may induce a current in one or more coils within the passive tag 140, and the current may be used to power the passive tag 140.

A reader 130 may access the ID information stored on a tag 140 by generating a modulated RF interrogation signal to evoke a modulated RF response from the tag 140. The RF response from the tag 140 may include the coded ID information stored in the tag 140. The reader 130 may decode the coded ID information to identify the entity associated with the tag 140. In the illustrated example of FIG. 1, the reader 130a may communicate with the tag 140a and the tag 140b to request and receive ID information from the tag 140a and 140b, respectively, via the antenna 134a-M. In a similar way, the reader 130b may communicate with the tag 140b and the tag 140c to request and receive ID information from the tag 140b and 140c, respectively, via the antenna 134b-1.

Generally, the RF signal (the electromagnetic waves) radiated by each antenna 134 may have a certain coverage in space. As shown, the antenna 134a-M of the reader 130a may provide a coverage 102a, and the antenna 134b-1 of the reader 130b may provide a coverage 102b. Because of the adjacency between the antenna 134a-M and the antenna 134b-1, the respective coverages 102a and 102b are partially overlapped. Generally, coverages of adjacent or neighboring antennas 134 of the same reader 130 or of neighboring readers 130 can have coverages 102 that are at least partially overlapped. When a tag 140 is located within an overlap between coverages 102 of two antennas 134, the tag 140 may be read by both antennas 134. As such, the tag 140b located within the overlap between the coverage 102a of the antenna 134a-M and the coverage 102b of the antenna 134b-1 can be read by the reader 130a via the antenna 134a-M and by the reader 130b via the antenna 134b-1.

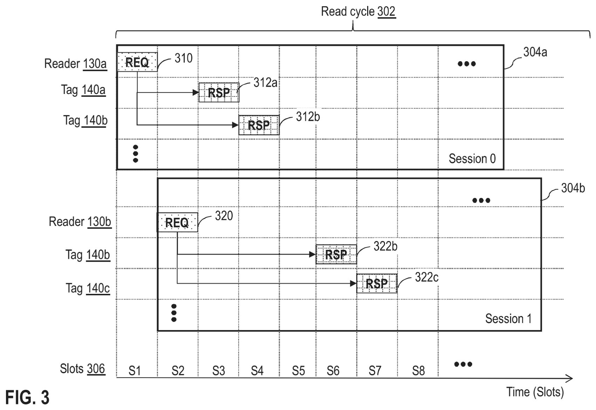

A reader 130 and a tag 140 may communicate with each other over a variety of frequency bands and according to a variety of communication protocols. In an example, a reader 130 may communicate with a tag 140 in an ISM band (e.g., a shared channel) and may utilize a slotted ALOHA protocol for communications. The slotted ALOHA protocol divides a shared channel into slots, which are fixed time intervals. The reader 130 may send an RF signal to scan or query the tag 140. The tag 140 may select a slot based on a random number (e.g., generated using a seed value provided by the reader 130) and may transmit a response to the reader 130 in the selected slot. An example of communications between readers 130 and tags 140 using time slots is shown in FIG. 3.

In an example, a reader 130 and a tag 140 may communicate further using communication sessions as defined in the EPC Gen2 RFID standard. As discussed above, the EPC Gen2 RFID protocol allows up to four communication sessions (e.g., session 0, session 1, session 2, and session 3) in an inventory round or inventory cycle. Each communication session is identified by a unique session identifier. Each of the communication sessions may have different modes of operations (e.g., related to how long a reader 130 may transmit a continuous RF carrier signal to power remote tags 140 and how a tag 140 may maintain the tag's state, etc.). A reader 130 may select one of the four communication sessions (e.g., session 0) to communicate with a tag 140 (e.g., to read ID information). When the tag 140 is initially powered up, the tag 140 may respond to any communication session. While the tag 140 still has power (e.g., provided by the reader 130), the tag 140 may respond to other communication sessions (e.g., sessions 1, 2 and 3). That is, the tag 140 may support four reads from four different sessions within an inventory cycle or read cycle. However, the tag 140 may be restricted to respond to each communication session only once. That is, once the tag 140 has responded to a particular communication session in an inventory round, the tag 140 may not respond to the same session again in that inventory round. In an example, a tag 140 may utilize flags (e.g., inventory flags) to track the communication sessions that the tag 140 has responded to. For instance, the tag 140 may use 4 flag bits, each corresponding to one of the four allowable communication sessions. At an initial power up, all the flag bits may be set to 0. Once the tag 140 has responded to a particular communication session, the tag 140 may set the corresponding flag bit to 1. The tag 140 may respond to a communication session with a corresponding flag bit set to 0 and may not respond to a communication session with a corresponding flag bit set to 1. In other examples, the tag 140 may utilize other mechanisms (e.g., state variables) to track the communication sessions that the tag 140 has responded to.

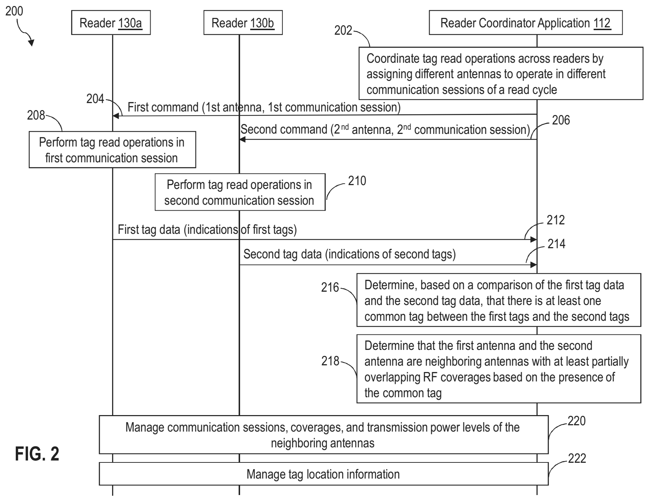

The computer system 110 may include processor(s), non-transitory memory, and a reader coordinator application 112 including instructions stored at the non-transitory memory and executable by the processor(s). According to an embodiment of the present disclosure, the reader coordinator application 112 may coordinate operations of the readers 130. More specifically, the reader coordinator application 112 may perform neighbor recognition (e.g., for neighboring antennas 134 and/or neighboring readers 130) by actively managing the readers 130 collaboratively and managing the communication sessions (e.g., the EPC Gen2 RFID protocol sessions) used by the readers 130 as will be discussed more fully below with reference to FIGS. 2 and 3. In some instances, the reader coordinator application 112 may store information 116 learnt from the neighbor recognition process in the database 114. The information 116 may include associations between the antennas 134 and corresponding tags 140 read via the respective antennas 134 and/or information about neighboring antennas 134.

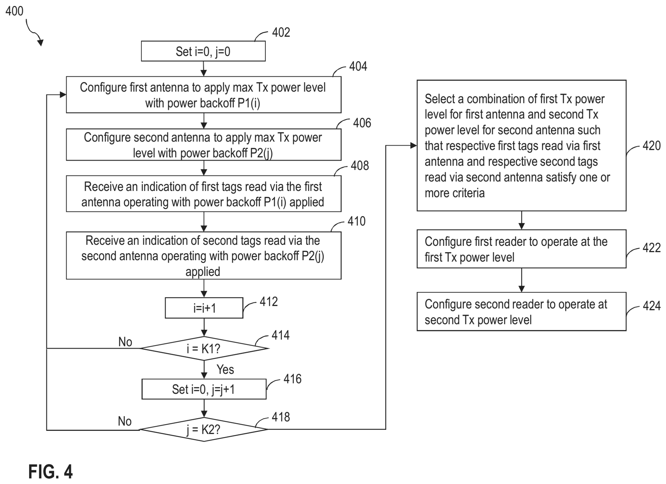

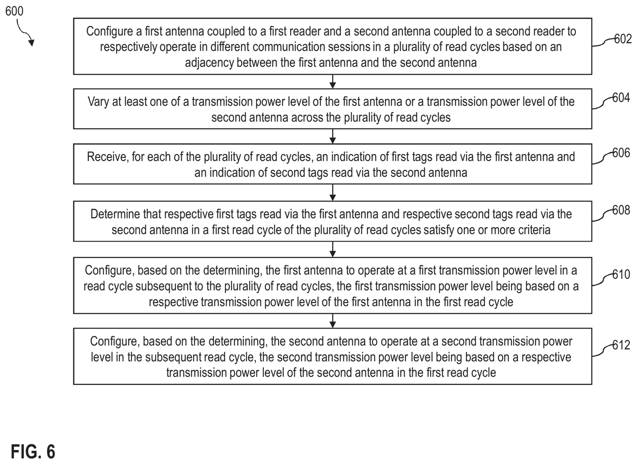

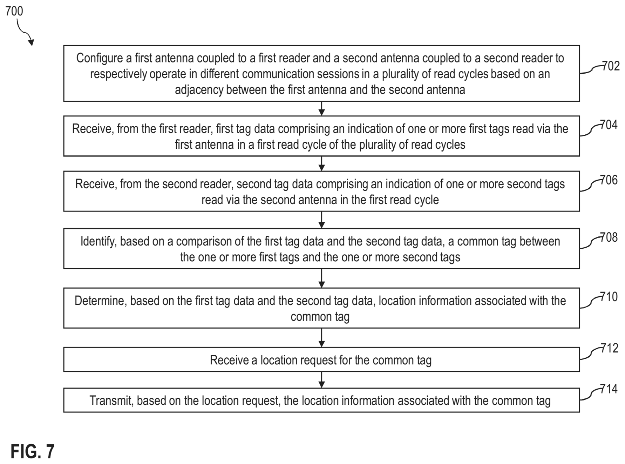

After the reader coordinator application 112 recognizes an adjacency between two antennas 134, the reader coordinator application 112 may manage RF coverages and/or transmission power of those adjacent antennas 134, for example, by walking the transmission power levels of one or more of those antennas 134 back, as will be discussed more fully below with reference to FIGS. 4 and 6. Managing RF coverages and/or transmission power levels of the antennas 134 can provide more efficient use of the readers and/or power. After the reader coordinator application 112 processes and obtains information (e.g., part of the information 116) about overlaps between antennas 134, the reader coordinator application 112 may further determine location information 118 associated with the tags 140 based on the information about the overlaps and may store the determined location information 118 in the database 114. Subsequently, the reader coordinator application 112 may provide the location information 118 upon requests (e.g., from an operator of the RFID system 100) to locate certain tags 140 (e.g., in a store area). In some instances, a certain tag 140 may become invisible in the RFID system 100 after some time. That is, the tag 140 may have been read via one of the antennas 134 at an earlier time but become unreachable by that antenna 134 at a later time. This may occur, for example, when there is a change in the surrounding environment. In an example, there may be changes near the tag 140 such as shifting or rotating the item to which the tag 140 is attached or placing other items near or on the tagged item. In another example, there may be changes or additions to existing clutter near the tag 140 that attenuate or reflect RF signals. In yet another example, there may be noise from other electronics near the tag 140. To rediscover an invisible tag 140, the reader coordinator application 112 may manage the readers 130 to scan for the invisible tag 140 based on the information 116 stored in the database 114. Mechanisms for managing and tracking tags 140' locations will be discussed more fully below with reference to FIG. 7.

FIG. 1 is merely an example of components of an RFID system 100, and variations are contemplated to be within the scope of the present disclosure. In embodiments, the RFID system 100 may include other components not illustrated in FIG. 1. In embodiments, the RFID system 100 may not include every component illustrated in FIG. 1. In embodiments, the components and connections may be implemented with different connections than those illustrated in FIG. 1. For instance, the readers 130 may also communicate with each other to facilitate the neighbor recognition, RF coverage and transmission power management, tag location determination, and/or lost tag tracking process discussed herein. Such and other embodiments are contemplated to be within the scope of the present disclosure.

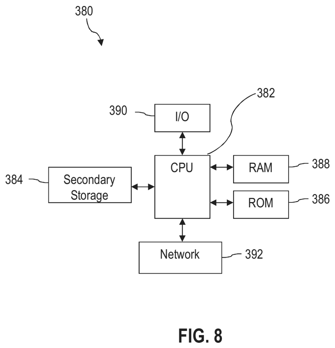

FIGS. 2 and 3 are discussed in relation to each other to illustrate reader coordination operations. Turning now to FIG. 2, an example method 200 of coordinating reader operations in the RFID system 100 is described. The method 200 illustrates operations performed by various components of the RFID system 100. Specifically, the components include the reader 130a, the reader 130b, and the reader coordinator application 112. However, it is contemplated that other component(s) of the RFID system 100 may be involved in performing the operations of the method 200. In embodiments, each of the reader 130a, the reader 130b, and the reader coordinator application 112 may implement the operations of the method 200 using a computer system with components as shown in FIG. 8. As illustrated, FIG. 2 includes a number of enumerated operations, but embodiments of the operations in FIG. 2 may include additional operations before, after, and in between the enumerated operations. In some embodiments, one or more of the enumerated operations may be omitted or performed in a different order.

At operation 202, the reader coordinator application 112 may coordinate tag read operations across the readers 130a and 130b by assigning different antennas 134 (e.g., the antenna 134a-M of the reader 130a and the antenna 134b-1 of the reader 130b) to operate in different communication sessions of a read cycle (e.g., the communication sessions 304 of the read cycle 302 shown in FIG. 3).

Turning now to FIG. 3, an example read cycle 302 for reading tags 140 in the RFID system 100 is described. In FIG. 3, the x-axis may represent time in units of slots 306. The read cycle 302 may be repeated (e.g., at a certain periodicity). The read cycle 302 may have any suitable duration and may include a plurality of time slots 306. In an example, the slots 306 may have equal duration and may correspond to slots in the slotted ALOHA protocol. In the illustrated example of FIG. 3, the read cycle 302 includes two communication sessions 304, individually shown as a first communication session 304a and a second communication session 304b. In an embodiment, the first and second communication sessions 304 may be EPC Gen2 protocol sessions. In the illustrated example of FIG. 3, the first communication session 304a may be session 0 as defined in the EPC Gen2 protocol, and the second communication session 304b may be session 1 as defined in the EPC Gen2 protocol. Each of the first and second communication sessions 304 may be identified by a unique session identifier. Generally, there may be up to four communication sessions 304 in a read cycle 302 according to the EPC Gen2 protocol.

Returning to FIG. 2, the reader coordinator application 112 may assign the antenna 134a-M of the first reader 130a to operate in the first communication session 304a of the read cycle 302 and assign the antenna 134b-1 of the second reader 130b to operate in the second communication session 304b of the read cycle 302. At operation 204, the reader coordinator application 112 may transmit, to the reader 130a, a first command to configure the antenna 134a-M to perform tag read operations using the first communication session 304a of the read cycle 302. At operation 206, the reader coordinator application 112 may transmit, to the reader 130b, a second command to configure the antenna 134b-1 to perform tag read operations using the second communication session 304b of the read cycle 302.

At operation 208, the reader 130a may perform tag read operations via the antenna 134a-M in the first communication session 304a (e.g., as shown in FIG. 3). At operation 210, the reader 130b may perform tag read operations via the antenna 134b-1 in the second communication session 304b (e.g., as shown in FIG. 3).

Turning now to FIG. 3, the reader 130a may perform tag read operations via the antenna 134a-M in the first communication session 304a based on the first command. For instance, the reader 130a may generate a first request 310 for tag read (shown as REQ) and may configure the antenna 134a-M to transmit an RF signal carrying the first request 310 and a session identifier identifying the first communication session 304a. The tags 140a and 140b that are within the coverage 102a of the antenna 134a-M may detect the first request 310 and may each respond by sending a respective response. For instance, the tag 140a may respond by transmitting a response 312a (shown as RSP), and the tag 140b may respond by transmitting a response 312b (shown as RSP). Each of the responses 312a and 312b may include information stored at the respective tags 140a and 140b. For instance, the response 312a from the tag 140a may store a first tag identifier identifying the tag 140a in the RFID system 100, and the tag 140b may store a second tag identifier identifying the tag 140b in the RFID system 100. As an example, the reader 130a may select slot 306 S1 for transmitting the first request 310a based on a random number generation, the tag 140a may select the slot 306 S3 for transmitting the response 312a based on a random number generation, and the tag 140b may select the slot 306 S4 for transmitting the response 312b. In some instances, the reader 130a may further include a seed value as part of the first request 310, and each of the tags 140a and 140b may generate the random number used for selecting the respective slots 306 S3 and S4 based on the seed value provided by the reader 130a.

The reader 130b may perform tag read operations via the antenna 134b-1 in the second communication session 304b based on the second command using substantially similar mechanisms as the reader 130a. For instance, the reader 130b may generate a second request 320 for tag read (shown as REQ) and may configure the antenna 134b-1 to transmit an RF signal carrying the request 320 and a session identifier identifying the second communication session 304b. The tags 140b and 140c that are within the coverage 102b of the antenna 134b-1 may detect the second request 320 and may each respond by sending a respective response. For instance, the tag 140b may respond by transmitting a response 322b, and the tag 140c may respond by transmitting a response 322c. Each of the responses 322b and 322c may include information stored at the respective tags 140b and 140c. For instance, the response 322b from the tag 140b may include the second tag identifier identifying the tag 140b in the RFID system 100. Similarly, the response 322c from the tag 140c may include a third tag identifier identifying the tag 140c in the RFID system 100. As an example, the reader 130b may select slot 306 S2 for transmitting the second request 320 based on a random number generation, the tag 140b may select the slot 306 S6 for transmitting the response 322b based on a random number generation, and the tag 140c may select the slot 306 S7 for transmitting the response 322c. In some instances, the reader 130b may further include a seed value as part of the second request 320, and each of the tags 140b and 140c may generate the random number used for selecting the respective slots 306 S6 and S7 based on the seed value provided by the reader 130b.

As discussed above, the tags 140a, 140b, and 140c may be passive tags. Thus, the RF signal transmitted by the reader 130a at slot 306 S1 may be a continuous wave signal and may power the tags 140a and 140b. Similarly, the RF signal transmitted by the reader 130b at slot 306 S2 may be a continuous wave signal and may power the tags 140b and 140c. Since the tag 140b is within the coverage 102a of the reader 130a and the coverage 102b of the reader 130b (shown in FIG. 1), the tag 140b may draw power from RF signals transmitted by both readers 130a and 130b.

FIG. 3 is merely an example of communication sessions 304 used for reading or scanning tags in the RFID system 100, and variations are contemplated to be within the scope of the present disclosure. In embodiments, two or more communication sessions may be performed concurrently overlapping in time within a read cycle 302. In other embodiments, two or more communication sessions 304 may be performed within a read cycle 302 but may not overlap in time. Such and other embodiments are contemplated to be within the scope of the present disclosure.

Returning to FIG. 2, at operation 212, after the reader 130a receives the responses 312a and 312b, the reader 130a may transmit first tag data based on the responses 312a and 312b to the reader coordinator application 112. The first tag data may include an indication of first tags 140 (e.g., the tag 140a and 140b) read via the antenna 134a-M. For instance, the first tag data may include the first tag identifier identifying the tag 140a and the second identifier identifying the tag 140b. At operation 214, after the reader 130b receives the responses 322a and 322b, the reader 130b may transmit second tag data based on the responses 322a and 322b to the reader coordinator application 112. The second tag data may include an indication of second tags 140 (e.g., the tag 140b and 140c) read via the antenna 134b-1. For instance, the second tag data may include the second tag identifier identifying the tag 140b and the third identifier identifying the tag 140c.

At operation 216, the reader coordinator application 112 may determine, based on a comparison of the first tag data and the second tag data, that there is a common tag 140 (e.g., the tag 140b) between the first tags 140 read via the antenna 134a-M and the second tags read via the antenna 134b-1. For instance, the reader coordinator application 112 may determine that both the first tag data and the second tag data include the same tag identifier (e.g., the second identifier identifying the tag 140b). At operation 218, the reader coordinator application 112 may determine that the antenna 134a-M and the antenna 134b-1 are neighboring antennas with at least partially overlapped RF coverages 102 based on the presence of the common tag 140b (between the first tags 140 read via the antenna 134a-M and the second tags 140 read via the antenna 134b-1).

At operation 220, the reader coordinator application 112 may manage communication sessions 304 used by neighboring antennas 134 (e.g., the antenna 134aM and the antenna 134b-1), coverages and transmission power levels of the neighboring antennas 134. In one example, the reader coordinator application 112 may configure the neighboring antennas 134a-M and 134b-1 to operate using different communication sessions 304 in subsequent read cycles 302. This may allow each of the antennas 134a-M and 134b-1 to continue to read the common tag 140 (e.g., to provide redundancy) without being impacted by the EPC Gen2 protocol restriction (where a tag may respond to a communication session 304 once per read cycle 302). In another example, the reader coordinator application 112 may manage coverages and transmission power levels of the neighboring antennas 134, for example, by walking the transmission power levels of one or more of those antennas 134 back. Mechanisms for managing neighboring antennas 134 are discussed more fully below with reference to FIGS. 4-6. At operation 222, the reader coordinator application 112 may also manage tag location information (e.g., to construct a spatial map of tags 140 read by the readers 130 and/or recover an invisible tag 140) as will be discussed more fully below with reference to FIG. 7.

Turning now to FIG. 4, an example method 400 of managing coverages 102 of readers 130 in an RFID system 100 is described. The method 400 may be implemented by the reader coordinator application 112. In embodiments, the method 400 may be implemented using a computer system with components as shown in FIG. 8. As illustrated, FIG. 4 includes a number of enumerated operations, but embodiments of the operations in FIG. 4 may include additional operations before, after, and in between the enumerated operations. In some embodiments, one or more of the enumerated operations may be omitted or performed in a different order.

In the method 400, the reader coordinator application 112 may configure neighboring antennas 134 (e.g., the antenna 134a-M and the antenna 134b-1) to operate in a different communication session 304 in a plurality of read cycles 302. For instance, the reader coordinator application 112 may configure a first antenna 134 of the neighboring antennas 134 to use a first communication session 304 (e.g., Session 0) and configure a second antenna 134 of the neighboring antennas 134 to use a second communication session 304 (e.g., Session 1) different than the first communication session 304. The reader coordinator application 112 may vary the transmission power levels of the neighboring antennas 134 across the read cycles 302.

As shown, at block 402, the reader coordinator application 112 may set an index i and an index j to 0. The index i may be used to track the transmission power backoff applied to a first antenna 134 (e.g., the antenna 134a-M) of a pair of neighboring antennas 134, where the first antenna 134 may be coupled to a first reader 130 (e.g., the reader 130a). The index j may be used to track the transmission power backoff applied to a second antenna 134 (e.g., the antenna 134b-1) of the pair of neighboring antennas 134, where the second antenna 134 may be coupled to a second reader 130 (e.g., the reader 130b). Generally, the first and second antennas 134 may be coupled to the same reader 130 or neighboring readers 130.

In the method 400, the set of power backoffs to be applied to the first antenna 134 may be represented by P1(i) with K1 number of power settings (e.g., i may vary from 0 to K1-1), and the set of power backoffs to be applied to the second antenna 134 may be represented by P2(j) with K2 number of power settings (e.g., j may vary from 0 to K2-1). In some instances, K1 and K2 may have the same value. In other instances, K1 and K2 may have different values. Generally, the values of K1 and K2 may be dependent on the capability of the first antenna 134 and the second antenna 134, respectively. In an example, P1(i) may start with 0 dB and may be in step of X dB increment, and P1(i) may start with 0 dB and may be in step of Y dB increment. In some instances, X and Y may have the same value (e.g., in 3 dB step). In other instances, X and Y may have different values. Generally, the values of X and Y may be dependent on the capability of the first antenna 134 and the second antenna 134, respectively. When P1(i) is 0 dB, the first antenna 134 is configured to transmit using a maximum transmit power of the first antenna 134. Similarly, when P2(j) is 0 dB, the second antenna 134 is configured to transmit using a maximum transmit power of the second antenna 134.

At block 404, the reader coordinator application 112 may configure, via the first reader 130, the first antenna 134 to apply a maximum transmission power level with a power backoff P1(i). At block 406, the reader coordinator application 112 may configure, via the second reader 130, the second antenna 134 to apply a maximum transmission power level with a power backoff P2(j). At block 408, the reader coordinator application 112 may receive an indication of first tags 140 read via the first antenna 134 with the power backoff P1(i) applied. At block 410, the reader coordinator application 112 may receive an indication of second tags 140 read via the second antenna 134 with the power backoff P2(j) applied.

In the illustrated example of FIG. 4, the reader coordinator application 112 may vary the transmission power level of one of the first antenna 134 or the second antenna 134 at a time (e.g., in each read cycle 302). For instance, at block 412, the reader coordinator application 112 may increment the index i by 1. At block 414, the reader coordinator application 112 may determine whether the index i has reached K1 (i.e., that all power backoffs P1(i) have been applied). If the index i has not reached K1, the reader coordinator application 112 may return to block 404 and repeat the operations at blocks 404 to 412. If, however, the index i has reached K1, the reader coordinator application 112 may proceed to block 416. At block 416, the reader coordinator application 112 may increment the index j by 1 and reset the index i to 0. At block 418, the reader coordinator application 112 may determine whether the index j has reached K2. If the index j has not reached K2, the reader coordinator application 112 may return to block 404 and repeat the operations at blocks 404 to 416. If, however, the index j has reached K2 (i.e., that all power backoffs P2(j) have been applied), the reader coordinator application 112 may proceed to block 420.

At block 420, after receiving tags 140 read via the first antenna 134 and the second antenna 134 at various combination of power settings, the reader coordinator application 112 may select a combination of a first transmission power level for the first antenna 134 (with a particular P1(i) applied) and a second transmission power level for the second antenna 134 (with a particular P2(i) applied) such that respective first tags 140 read via the first antenna 134 (received at block 408) and respective second tags 140 read via the second antenna 134 (received at block 410) satisfy one or more criteria. For instance, a first criterion may require the number of common tags 140 between respective first tags 140 read via the first antenna 134 (received at block 408) and respective second tags 140 read via the second antenna 134 (received at block 410) to satisfy (e.g., less than or equals) a threshold. A second criterion may require each tag in a particular set of tags to be included in at least one of the respective first tags 140 read via the first antenna 134 or the respective second tags 140 read via the second antenna 134. The first criterion may ensure that the amount of coverage overlap between neighboring antennas 134 is minimized. The threshold may be configurable. In an example, the threshold may be tuned to minimize the coverage overlap without causing any tags not to be read by any antennas 134. In another example, the threshold may be tuned to provide a certain coverage overlap to provide tag read redundancy (e.g., in case one antenna 134 fails to read a certain tag 140, a neighboring antenna 134 may reach and read that tag 140). The second criterion may ensure that no tag in the particular set of tags 140 is lost (i.e., no coverage hole).

At block 422, after selecting the combination of the first and second transmission levels for the respective first and second antennas 134, the reader coordinator application 112 may configure, via the first reader 130, the first antenna 134 to operate at the selected first transmission power level for subsequent tag read operations. At block 424, the reader coordinator application 112 may further configure, via the second reader 130, the second antenna 134 to operate at the selected second transmission power level for subsequent tag read operations. In some embodiments, the reader coordinator application 112 may adjust (e.g., turn up) the selected first transmission power level (for the first antenna 134) and/or the second transmission power level (for the second antenna 134) by a certain amount (e.g., a certain percentage) to account for errors in the process.

In some examples, instead of selecting the combination of the first and second transmission levels for the respective first and second antennas 134 at block 420 after iterating through all the different combinations of P1(i) and P2(j), the reader coordinator application 112 may check whether the above two criteria are satisfied at each iteration (e.g., after block 410). Upon detecting an iteration satisfying the above two criteria, the reader coordinator application 112 may drop the remaining iterations and proceed to block 422. Generally, the reader coordinator application 112 may vary the transmission power levels of the first and second antennas 134 in any suitable order to search for a combination of transmission power levels for the first and second antennas 134 that satisfies the above two criteria.

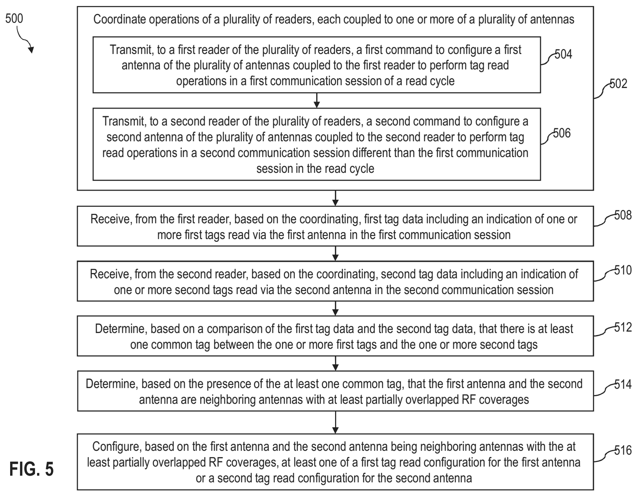

Turning now to FIG. 5, a method 500 is described. In an embodiment, the method 500 is a method of identifying neighboring readers 130 and/or neighboring antennas 134 in an RFID system 100 through reader coordination. The method 500 may be implemented by the reader coordinator application 112 in the RFID system 100. The method 500 may include similar mechanisms as discussed above with reference to FIGS. 1-4. In embodiments, the method 500 may be implemented using a computer system with components as shown in FIG. 8. As illustrated, FIG. 5 includes a number of enumerated operations, but embodiments of the operations in FIG. 5 may include additional operations before, after, and in between the enumerated operations. In some embodiments, one or more of the enumerated operations may be omitted or performed in a different order.

At block 502, the reader coordinator application 112 coordinates operations of a plurality of readers 130, each coupled to one or more of a plurality of antennas 134. As part of the coordination, the reader coordinator application 112 performs operations of blocks 504 and 506. At block 504, the reader coordinator application 112 transmits, to a first reader 130 of the plurality of readers 130, a first command to configure a first antenna 134 of the plurality of antennas 134 coupled to the first reader 130 to perform tag read operations using a first communication session 304 in a read cycle 302. At block 506, the reader coordinator application 112 transmits, to a second reader 130 of the plurality of readers 130, a second command to configure a second antenna 134 of the plurality of antennas 134 coupled to the second reader 130 to perform tag read operations using a second communication session 304 different than the first communication session 304 in the read cycle 302. In an embodiment, the first reader 130 is different than the second reader 130. In other words, the first antenna 134 and the second antenna 134 are coupled to different readers 130. In another embodiment, the first reader 130 and the second reader 130 correspond to the same reader 130. In other words, the first antenna 134 and the second antenna 134 are coupled to the same reader 130. In an embodiment, the first communication session 304 configured for the first antenna 134 and the second communication session 304 configured for the second antenna 134 correspond to different EPC Gen2 RFID protocol sessions identified by different session identifiers.

At block 508, the reader coordinator application 112 receives, from the first reader 130, based on the coordinating at block 502, first tag data including an indication of one or more first tags 140 read via the first antenna 134 in the first communication session 304. At block 510, the reader coordinator application 112 receives, from the second reader 130, based on the coordinating at block 502, second tag data including an indication of one or more second tags 140 read via the second antenna 134 in the second communication session 304.

At block 512, the reader coordinator application 112 determines, based on a comparison of the first tag data and the second tag data, that there is at least one common tag 140 between the one or more first tags 140 read via the first antenna 134 and the one or more second tags 140 read via the second antenna. In an embodiment, the first tag data includes one or more first tag identifiers, each identifying a respective one of the one or more first tags 140, and the second tag data includes one or more second tag identifiers, each identifying a respective one of the one or more second tags 140. In such an embodiment, the determining the presence of the common tag 140 is based on a tag identifier of the one or more first tag identifiers being identical to a tag identifier of the one or more second tag identifiers. At block 514, the reader coordinator application 112 determines, based on the presence of the at least one common tag 140 (between the one or more first tags 140 read via the first antenna 134 and the one or more second tags 140 read via the second antenna 134), that the first antenna 134 and the second antenna 134 are neighboring antennas 134 with at least partially overlapped RF coverages 102.

At block 516, the reader coordinator application 112 configures, based on the first antenna 134 and the second antenna 134 being neighboring antennas 134 with the at least partially overlapped RF coverages 102, at least one of a first tag read configuration for the first antenna 134 or a second tag read configuration for the second antenna 134. In an embodiment, as part of configuring the at least one of the first tag read configuration or the second tag read configuration, the reader coordinator application 112 may configure the first antenna 134 and the second antenna 134 to use different communication session 304 for subsequent tag read operations. For instance, the reader coordinator application 112 transmits, to the first reader 130, a third command to configure the first antenna 134 to perform the subsequent tag read operations using a third communication session 304 in a subsequent read cycle 302. Further, the reader coordinator application 112 transmits, to the second reader 130, a fourth command to configure the second antenna 134 to perform the subsequent tag read operations using a fourth communication session 304 different than the third communication session 304 in the subsequent read cycle 302. In an embodiment, as part of configuring the at least one of the first tag read configuration or the second tag read configuration, the reader coordinator application 112 determines a transmit power adjustment for at least one of the first antenna 134 or the second antenna 134 based on an amount of overlap between the coverages 102 of the first antenna 134 and the second antenna 134. The reader coordinator application 112 further transmits, to at least one of the first reader 130 or the second reader 130, a third command to apply the transmit power adjustment respectively to the first antenna 134 or the second antenna 134 for performing the subsequent tag read operations.

Turning now to FIG. 6, a method 600 is described. In an embodiment, the method 600 is a method of managing coverages 102 of readers 130 in an RFID system 100 through reader coordination. The method 600 may be implemented by the reader coordinator application 112 in the RFID system 100. The method 600 may include similar mechanisms as discussed above with reference to FIGS. 1-5. In embodiments, the method 600 may be implemented using a computer system with components as shown in FIG. 8. As illustrated, FIG. 6 includes a number of enumerated operations, but embodiments of the operations in FIG. 6 may include additional operations before, after, and in between the enumerated operations. In some embodiments, one or more of the enumerated operations may be omitted or performed in a different order.

At block 602, the reader coordinator application 112 configures a first antenna 134 coupled to a first reader 130 and a second antenna 134 coupled to a second reader 130 to respectively operate in different communication sessions 304 in a plurality of read cycles 302 based on an adjacency between the first antenna 134 and the second antenna 134. In an embodiment, the first reader 130 is different than the second reader 130. In another embodiment, the first reader 130 and the second reader 130 correspond to the same reader 130. In an embodiment, the different communication sessions 304 configured for the first antenna 134 and the second antenna 134 correspond to different EPC Gen2 RFID protocol sessions.

At block 604, the reader coordinator application 112 varies at least one of a transmission power level of the first antenna 134 or a transmission power level of the second antenna 134 across the plurality of read cycles 302. At block 606, the reader coordinator application 112 receives, for each of the plurality of read cycles 302, an indication of first tags 140 (e.g., tag ID information of the first tags 140) read via the first antenna 134 and an indication of second tags 140 (e.g., tag ID information of the second tags 140) read via the second antenna 134.

At block 608, the reader coordinator application 112 determines that respective first tags 140 read via the first antenna 134 and respective second tags 140 read via the second antenna 134 in a first read cycle 302 of the plurality of read cycles 302 satisfy one or more criteria. In an embodiment, as part of the determining, the reader coordinator application 112 determines that at least one of: 1) a number of common tags 140 between the respective first tags 140 read via the first antenna 134 and the respective second tags 140 read via the second antenna 134 in the first read cycle 302 satisfies a threshold; and 2) each tag 140 in a particular set of tags 140 is included in at least one of the respective first tags 140 read via the first antenna 134 or the respective second tags 140 read via the second antenna 134 in the first read cycle 302.

At block 610, the reader coordinator application 112 configures, based on the determining at block 608, the first antenna 134 to operate at a first transmission power level in a read cycle 302 subsequent to the plurality of read cycles 302, the first transmission power level being based on a respective transmission power level of the first antenna 134 in the first read cycle 302. At block 612, the reader coordinator application 112 configures, based on the determining, the second antenna 134 to operate at a second transmission power level in the subsequent read cycle 302, the second transmission power level being based on a respective transmission power level of the second antenna 134 in the first read cycle 302.

In an embodiment, as part of varying the at least one of the transmission power level of the first antenna 134 or the transmission power level of the second antenna 134 at block 604, the reader coordinator application 112 configures at least one of the first antenna 134 to iterate through a plurality of first transmission power adjustments (e.g., each in one of the plurality of read cycles 302) or the second antenna 134 to iterate through a plurality of second transmission power adjustments (e.g., each in one of the plurality of read cycles 302). In an embodiment, the plurality of first transmission power adjustments are first power backoffs from a maximum transmission power level of the first antenna 134, and the plurality of second transmission power adjustments are second power backoffs from a maximum transmission power level of the second antenna 134. In an embodiment, the first transmission power level configured for the first antenna 134 to operate in the subsequent read cycle 302 at block 610 is further based on a respective one of the plurality of first transmission power adjustments configured for the first antenna 134 to operate in the first read cycle 302. In an embodiment, the second transmission power level configured for the second antenna 134 to operate in the subsequent read cycle at block 612 is further based on a respective one of the plurality of second transmission power adjustments configured for the second antenna 134 to operate in the first read cycle 302.

Turning now to FIG. 7, a method 700 is described. In an embodiment, the method 700 is a method of managing and tracking locations of tags 140 in an RFID system 100 through reader coordination. The method 700 may be implemented by the reader coordinator application 112 in the RFID system 100. The method 700 may include similar mechanisms as discussed above with reference to FIGS. 1-6. In embodiments, the method 700 may be implemented using a computer system with components as shown in FIG. 8. As illustrated, FIG. 7 includes a number of enumerated operations, but embodiments of the operations in FIG. 7 may include additional operations before, after, and in between the enumerated operations. In some embodiments, one or more of the enumerated operations may be omitted or performed in a different order.

At block 702, the reader coordinator application 112 configures a first antenna 134 coupled to a first reader 130 and a second antenna 134 coupled to a second reader 130 to respectively operate in different communication sessions 304 in a plurality of read cycles 302 based on an adjacency between the first antenna 134 and the second antenna 134. At block 704, the reader coordinator application 112 receives, from the first reader 130, first tag data including an indication of one or more first tags 140 read via the first antenna 134 in a first read cycle 302 of the plurality of read cycles 302. At block 706, the reader coordinator application 112 receives, from the second reader 130, second tag data including an indication of one or more second tags 140 read via the second antenna 134 in the first read cycle 302. At block 708, the reader coordinator application 112 identifies, based on a comparison of the first tag data and the second tag data, a common tag 140 between the one or more first tags 140 and the one or more second tags 140.

At block 710, the reader coordinator application 112 determines, based on the first tag data and the second tag data, location information 118 associated with the common tag 140. In an embodiment, the first tag data read via the first antenna 134 further includes first receive signal information (e.g., RSSI, TOA) associated with the common tag 140 with respect to the first antenna 134, and the second tag data read via the second antenna 134 further includes second receive signal information (e.g., RSSI, TOA) associated with the common tag 140 with respect to the second antenna 134. In such an embodiment, the location information 118 associated with the common tag 140 is determined based on a difference between the first receive signal information and the second receive signal information. In an example, the reader coordinator application 112 may use location triangulation techniques to determine a location of the common tag 140 based on the known locations of the first and second antenna 134 and the receive signal information difference. Generally, the reader coordinator application 112 may vary the coverages of neighboring antennas 134 to determine location information for each tag 140 in the RFID system 100 based on receive signal information received from respective neighboring antennas 134 and may construct a spatial map of locations of tags 140 in the RFID system 100.

At block 712, the reader coordinator application 112 receives a location request for the common tag 140. At block 714, the reader coordinator application 112 transmits, based on the location request, the location information 118 associated with the common tag 140. For instance, the reader coordinator application 112 may store the location information 118 of the common tag 140 in a database 114. Upon receiving the location request, the reader coordinator application 112 may retrieve the location information 118 of the common tag 140 from the database 114 and respond to the location request by providing the retrieved location information 118.

In an embodiment, the reader coordinator application 112 further receives, from the second reader 130, an indication of one or more third tags 140 read via the second antenna 134 at a later time (e.g., in a second read cycle 302 of the plurality of read cycles 302 after the first read cycle 302). The reader coordinator application 112 further determines that the common tag 140 is absent from the one or more third tags 140 (read via the second antenna 134). In some instances, the reader coordinator application 112 may store, in the database 114, information 116 including an association between the common tag 140 and the first and second antennas 134 (e.g., an indication that the common tag 140 can be reached by the first and second antennas 134) and/or an indication of an adjacency between the first and second antennas 134. As such, upon the reader coordinator application 112 detecting that the second antenna 134 fails to read the common tag 140, the reader coordinator application 112 may request the first antenna 134 to assist in reaching the common tag 140 based on the first antenna 134 being adjacent to the second antenna 134 and was able to read the common tag 140 previously. For instance, the reader coordinator application 112 transmits, to the first reader 130, a command to read (or scan for) the common tag 140 using the first antenna 134 based on the first antenna 134 being adjacent to the second antenna 134 and the association between the first antenna 134 and the common tag 140 (stored in the information 116).

In an embodiment, upon the reader coordinator application 112 recognizing the adjacency between the first and second antennas 134, the reader coordinator application 112 may reduce the transmission power level of the first antenna 134 (e.g., to save power and/or manage RF coverages). Upon the reader coordinator application 112 detecting that the second antenna 134 fails to read the common tag 140 subsequently, the reader coordinator application 112 further transmits, to the first reader 130, a command to increase the transmission power level of the first antenna 134 for reading the common tag 140 in the third read cycle 302.

FIG. 8 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, RAM 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an ASIC that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, USB interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code-division multiple access (CDMA), global system for mobile communications (GSM), LTE, WiFi (IEEE 802.11), Bluetooth, Zigbee, narrowband Internet of things (NB loT), near field communications (NFC), and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method implemented in a radio frequency identification (RFID) system for identifying neighboring readers and antennas in the RFID system through reader coordination, the method comprising:
coordinating, by a reader coordinator application at a computer system, operations of a plurality of readers, each coupled to one or more of a plurality of antennas, wherein the coordinating comprises:
transmitting, to a first reader of the plurality of readers, a first command to configure a first antenna of the plurality of antennas coupled to the first reader to perform tag read operations using a first communication session in a read cycle; and
transmitting, to a second reader of the plurality of readers, a second command to configure a second antenna of the plurality of antennas coupled to the second reader to perform tag read operations using a second communication session different than the first communication session in the read cycle;
receiving, by the reader coordinator application, from the first reader, first tag data comprising an indication of one or more first tags read via the first antenna in the first communication session;
receiving, by the reader coordinator application, from the second reader, second tag data comprising an indication of one or more second tags read via the second antenna in the second communication session;
determining, by the reader coordinator application, based on a comparison of the first tag data and the second tag data, that there is at least one common tag between the one or more first tags read via the first antenna and the one or more second tags read via the second antenna;
determining, by the reader coordinator application, based on a presence of the at least one common tag, that the first antenna and the second antenna are neighboring antennas with at least partially overlapped radio frequency (RF) coverages; and
configuring, by the reader coordinator application, based on the first antenna and the second antenna being neighboring antennas with the at least partially overlapped RF coverages, at least one of a first tag read configuration for the first antenna or a second tag read configuration for the second antenna for performing subsequent tag read operations.

2. The method of claim 1, wherein the configuring the at least one of the first tag read configuration for the first antenna or the second tag read configuration for the second antenna comprises:
transmitting, by the reader coordinator application, to the first reader, a third command to configure the first antenna to perform the subsequent tag read operations using a third communication session in a subsequent read cycle, and
transmitting, by the reader coordinator application, to the second reader, a fourth command to configure the second antenna to perform the subsequent tag read operations using a fourth communication session different than the third communication session in the subsequent read cycle; or
determining, by the reader coordinator application, a transmit power adjustment for at least one of the first antenna or the second antenna based on an amount of overlap between the coverages of the first antenna and the second antenna, and
transmitting, by the reader coordinator application, to the at least one of the first reader or the second reader, a third command to apply the transmit power adjustment respectively to the first antenna or the second antenna for performing the subsequent tag read operations.

3. The method of claim 1, wherein:
the first tag data comprises one or more first tag identifiers, each identifying a respective one of the one or more first tags,
the second tag data comprises one or more second tag identifiers, each identifying a respective one of the one or more second tags, and
the determining that there is the at least one common tag between the one or more first tags read via the first antenna and the one or more second tags read via the second antenna is based on a tag identifier of the one or more first tag identifiers being identical to a tag identifier of the one or more second tag identifiers.

4. The method of claim 1, wherein:
the first reader is different than the second reader;
the first reader and the second reader correspond to the same reader; or
the first communication session configured for the first antenna and the second communication session configured for the second antenna correspond to different Electronic Product Code (EPC) Gen2 RFID protocol sessions.

5. A method implemented in a radio frequency identification (RFID) system to manage coverages of readers through reader coordination, the method comprising:
configuring, by a reader coordinator application at a computer system, a first antenna coupled to a first reader and a second antenna coupled to a second reader to respectively operate in different communication sessions in a plurality of read cycles based on an adjacency between the first antenna and the second antenna;
varying, by the reader coordinator application, at least one of a transmission power level of the first antenna or a transmission power level of the second antenna across the plurality of read cycles;
receiving, by the reader coordinator application, for each of the plurality of read cycles, an indication of first tags read via the first antenna and an indication of second tags read via the second antenna;
determining, by the reader coordinator application, that respective first tags read via the first antenna and respective second tags read via the second antenna in a first read cycle of the plurality of read cycles satisfy one or more criteria; and
configuring, by the reader coordinator application, based on the determining, the first antenna to operate at a first transmission power level in a read cycle subsequent to the plurality of read cycles, the first transmission power level being based on a respective transmission power level of the first antenna in the first read cycle.

6. The method of claim 5, wherein the varying the at least one of the transmission power level of the first antenna or the transmission power level of the second antenna across the plurality of read cycles comprises:
configuring at least one of:
the first antenna to iterate through a plurality of first transmission power adjustments, each in one of the plurality of read cycles, or
the second antenna to iterate through a plurality of second transmission power adjustments, each in one of the plurality of read cycles.

7. The method of claim 6, wherein:
the plurality of first transmission power adjustments are first power backoffs from a maximum transmission power level of the first antenna, and
the plurality of second transmission power adjustments are second power backoffs from a maximum transmission power level of the second antenna; or
the first transmission power level configured for the first antenna to operate in the subsequent read cycle is further based on a respective one of the plurality of first transmission power adjustments configured for the first antenna to operate in the first read cycle.

8. The method of claim 5, wherein the determining that the respective first tags read via the first antenna and the respective second tags read via the second antenna in the first read cycle satisfies the one or more criteria comprises at least one of:
determining that a number of common tags between the respective first tags read via the first antenna and the respective second tags read via the second antenna in the first read cycle satisfies a threshold; or
determining that each tag in a particular set of tags is included in at least one of the respective first tags read via the first antenna or the respective second tags read via the second antenna in the first read cycle.

9. The method of claim 5, further comprising:
configuring, by the reader coordinator application, the second antenna to operate at a second transmission power level in the subsequent read cycle, the second transmission power level being based on a respective transmission power level of the second antenna in the first read cycle.

10. The method of claim 5, wherein:
the first reader is different than or the same as the second reader; or
the different communication sessions configured for the first antenna and the second antenna correspond to different Electronic Product Code (EPC) Gen2 RFID protocol sessions.

11. A method implemented in a radio frequency identification (RFID) system to manage and track tag locations through reader coordination, the method comprising:
configuring, by a reader coordinator application at a computer system, a first antenna coupled to a first reader and a second antenna coupled to a second reader to respectively operate in different communication sessions in a plurality of read cycles based on an adjacency between the first antenna and the second antenna;
receiving, by the reader coordinator application, from the first reader, first tag data comprising an indication of one or more first tags read via the first antenna in a first read cycle of the plurality of read cycles;
receiving, by the reader coordinator application, from the second reader, second tag data comprising an indication of one or more second tags read via the second antenna in the first read cycle;
identifying, by the reader coordinator application, based on a comparison of the first tag data and the second tag data, a common tag between the one or more first tags and the one or more second tags; and
determining, by the reader coordinator application, based on the first tag data and the second tag data, location information associated with the common tag.

12. The method of claim 11, further comprising:
receiving, by the reader coordinator application, a location request for the common tag; and
transmitting, by the reader coordinator application, based on the location request, the location information associated with the common tag.

13. The method of claim 11, wherein:
the first tag data further comprises first receive signal information associated with the common tag with respect to the first antenna,
the second tag data further comprises second receive signal information associated with the common tag with respect to the second antenna, and
the determining the location information associated with the common tag is further based on a difference between the first receive signal information and the second receive signal information.

14. The method of claim 11, further comprising:
receiving, by the reader coordinator application, from the second reader, an indication of one or more third tags read via the second antenna in a second read cycle of the plurality of read cycles after the first read cycle;
determining, by the reader coordinator application, that the common tag is absent from the one or more third tags; and
transmitting, by the reader coordinator application, to the first reader, a command to read the common tag using the first antenna in a third read cycle of the plurality of read cycles after the second read cycle based on the first antenna being an adjacent antenna of the second antenna.

15. The method of claim 14, further comprising:
transmitting, by the reader coordinator application, to the first reader, based on the adjacency between the first antenna and the second antenna, a first command to reduce a transmission power level of the first antenna; and
transmitting, by the reader coordinator application, to the first reader, based on the absence of the common tag and the adjacency between the first antenna and the second antenna, a second command to increase the transmission power level of the first antenna for reading the common tag in the third read cycle.
